# FASCICULE DE BREVET EUROPEEN

(11) **EP 3 994 409 B1**
(45) Date de publication et mention de la délivrance du brevet: **13.03.2024**
(21) Numéro de dépôt: 20734734.5
(22) Date de dépôt: 25.06.2020
(51) Int. Cl.: F28D 20/00, F28D 20/02, F02C 6/16

(54) **SYSTEME DE STOCKAGE ET DE RECUPERATION DE CHALEUR A L'AXE HORIZONTAL**
HORIZONTALACHSENWÄRMERÜCKGEWINNUNGS- UND SPEICHERSYSTEM
HORIZONTAL-AXIS HEAT RECOVERY AND STORAGE SYSTEM

(30) Priorité: 04.07.2019 FR 1907459
(43) Date de publication de la demande: 11.05.2022
(73) Titulaire: IFP Energies nouvelles, 92852 Rueil-Malmaison (FR)
(72) Inventeur: TEIXEIRA, David, 92852 Rueil-Malmaison Cedex (FR); SAEEDI, Navid, 92852 Rueil-Malmaison Cedex (FR); HAROUN, Yacine, 92852 Rueil-Malmaison Cedex (FR)
(74) Mandataire: IFP Energies nouvelles
(86) Numéro de dépôt international: PCT/EP2020/067827
(87) Numéro de publication internationale: WO 2021/001251

(56) Documents cités:
- WO-A1-2017/198397
- FR-A1- 3 034 813

## Description

### Domaine technique

La présente invention concerne principalement le domaine de stockage d'énergie par air comprimé mais pourrait s'appliquer à d'autres systèmes de réservoirs sous pression.

La production d'électricité à partir d'énergies renouvelables, par exemple par l'intermédiaire de panneaux solaires, ou d'éoliennes terrestres ou marines, est en plein essor. Les principaux inconvénients de ces moyens de production sont l'intermittence de la production et la possible non-adéquation entre la période de production et la période de consommation. Il est donc important de disposer d'un système de stockage de l'énergie lors de la production pour la restituer lors d'une période de consommation.

Il existe de nombreuses technologies permettant cet équilibre.

Parmi elles, la plus connue est la Station de Transfert d'Eau par Pompage (STEP) qui consiste en l'utilisation de deux réservoirs d'eau à des altitudes différentes. L'eau est pompée du bassin inférieur vers le bassin supérieur lors de la phase de charge. L'eau est ensuite envoyée vers une turbine, en direction du bassin inférieur, lors de la décharge.

L'utilisation de batteries de différents types (lithium, nickel, sodium-soufre, plomb-acide...) peut également répondre à ce besoin de stockage d'énergie.

Une autre technologie, le stockage d'énergie par rotor (FES pour Flywheel Energy Storage) consiste à accélérer un rotor (volant) à une vitesse très élevée et à maintenir l'énergie dans le système sous forme d'énergie cinétique. Lorsque l'énergie est extraite de ce système FES, la vitesse de rotation du volant est réduite en conséquence du principe de conservation de l'énergie. L'ajout d'énergie au système FES entraîne, en conséquence, une augmentation de la vitesse du volant.

La technologie de stockage d'énergie par utilisation d'un gaz comprimé (souvent de l'air comprimé) est prometteuse. L'énergie produite et non consommée est utilisée pour comprimer de l'air à des pressions comprises entre 40 bar et 200 bar à l'aide de compresseurs (pouvant être multi-étagés). Lors de la compression, la température de l'air augmente. Afin de limiter le coût des réservoirs de stockage et minimiser la consommation d'électricité du compresseur, l'air peut être refroidi entre chaque étage de compression. L'air comprimé est alors stocké sous pression, soit dans des cavités naturelles (cavernes), soit dans des réservoirs artificiels.

Il existe une variante en développement. Il s'agit d'un procédé dit adiabatique dans lequel la chaleur issue de la compression de l'air est récupérée, stockée et restituée à l'air avant de le détendre. Il s'agit de la technologie AACAES (issue de l'anglais « Advanced Adiabatic Compressed Air Energy Storage »).

Dans un système AACAES, l'air comprimé est stocké dans un réservoir de manière indépendante au stockage de chaleur. Dans un tel système, l'air est stocké à une température proche de la température ambiante (a priori inférieure à 50').

Selon certaines conceptions envisagées de l'AACAES, la chaleur est stockée en utilisant un fluide caloporteur permettant de stocker la chaleur issue de la compression de l'air et de la restituer à l'air avant sa détente au moyen d'échangeurs de chaleur.

Selon d'autres conceptions envisagées de l'AACAES, la chaleur est stockée au moyen de solides statiques contenus dans un ou plusieurs conteneurs. Par exemple, la chaleur est stockée dans un matériau sous forme de particules, dites particules de stockage de la chaleur, en lit fixe disposé dans un ou plusieurs conteneurs, et traversée par l'air à refroidir. Cette chaleur est restituée à l'air froid qui traverse le lit fixe en sens opposé lors d'une phase de décharge.

Dans tous les cas, un tel système de stockage d'énergie par air comprimé requiert un ou plusieurs réservoirs, appelé par la suite TES (« Thermal Energy Storage » en anglais signifiant moyen de stockage de la chaleur) qui est au moins à la fois résistant à la pression, résistant à la température de stockage et étanche au gaz circulant dans le TES. La résistance à la pression est notamment un enjeu important puisque les pressions de stockage de l'air comprimé sont au moins égales à 100 bar.

### Technique antérieure

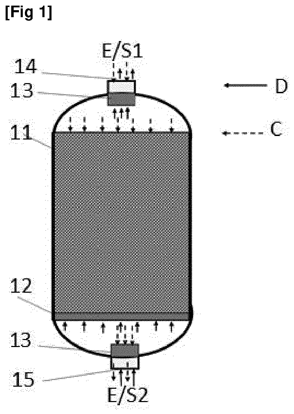

La [Fig 1] présente un système connu de stockage et de récupération de chaleur composé d'une colonne cylindrique dont l'axe longitudinal est vertical. Cette colonne est équipée d'un lit fixe de particules de stockage de chaleur 11, ces particules de stockage de chaleur étant par exemple des éléments solides, d'une grille support de lit 12 et d'un moyen de diffusion du jet de fluide 13. Pour les colonnes très hautes, le lit de solide peut être composé de plusieurs sections de lit supportées par plusieurs grilles, afin de répartir le poids des lits sur plusieurs grilles horizontales.

Le fluide caloporteur peut être introduit par le haut ou le bas de la colonne. Par exemple, pendant la période de charge C, le gaz peut être introduit par le haut de la colonne 14 à une température entre 100 à 600 degrés Celsius et sort du bas de la colonne 15 à une température entre 50 et 200 degrés Celsius. Pendant la période de décharge D, le fluide caloporteur, par exemple l'air, est introduit par le bas de la colonne 15 à température d'environ 50 à 100 degrés Celsius et sort de la colonne par le haut 14. Les durées de cycle de charge C, décharge D et pause varient en fonction du procédé. Ils peuvent être de plusieurs minutes, plusieurs heures ou plusieurs jours voir plusieurs mois.

Selon une variante, comme décrit dans la demande de brevet FR 3014182, plusieurs systèmes de stockage et de récupération de la chaleur peuvent être utilisés, chacun d'eux ayant une température de stockage propre. Mais ce système a l'inconvénient d'être complexe et onéreux.

On connaît également le système de stockage et de récupération de chaleur décrit dans la demande de brevet FR 3044751 et représenté sur la [Fig 2]. Le système 1 comprend plusieurs lits 2 de particules de stockage 3 disposés verticalement les uns au-dessus des autres et séparés par des plaques 4 et 5.Ces lits sont positionnés dans une colonne cylindrique dont l'axe longitudinal est vertical ou sensiblement vertical. Ces plaques 4 et 5 comportent des ouvertures pour permettre le passage du fluide à travers elles. Par ailleurs, ces ouvertures servent au guidage du fluide afin que celui-ci traverse les différents étages de lit de particules de stockage 3, radialement. Le fluide chaud GC, par exemple arrive par l'entrée 7 située en haut du système de stockage et de récupération de chaleur 1. Il traverse radialement les différents étages de lit de particules de stockage 3, alternativement de l'intérieur vers l'extérieur, puis de l'extérieur vers l'intérieur (ou inversement). Puis, il ressort plus froid (GF), par la sortie 7 située en bas du système de stockage et de récupération de chaleur 1. Le système peut également comprendre des moyens de distribution 6 pour l'entrée et/ou la sortie de fluide des différents lits 2.

Comme expliqué précédemment, ces systèmes de l'art antérieur sont disposés dans une position pour laquelle l'axe de révolution est vertical. Cette disposition est particulièrement problématique pour les opérations de manutention puisqu'il faut alors des engins de levage adaptés à la grande hauteur de ces colonnes verticales (de l'ordre de 20 à 25m par exemple), par exemple des grues de grande taille. Cela est d'autant plus vrai lorsque le montage des éléments internes des colonnes (grilles, lits de particules) sont montés directement sur place.

Par ailleurs, cette disposition verticale est particulièrement gênante puisque sa grande hauteur la rend visible à une grande distance.

L'invention a donc pour objet de faciliter les opérations de levage/manutention et le montage de la colonne et d'autre part de réduire l'encombrement visuel du système.

Pour se faire, l'invention concerne un système de stockage et de récupération de la chaleur comprenant au moins une paroi externe cylindrique, au moins un premier volume, au moins un deuxième volume, et au moins deux moyens d'injection/soutirage de fluide. Les premier et deuxième volumes sont séparés par au moins un moyen de stockage de la chaleur comprenant au moins un lit de particules de stockage de la chaleur. De plus, le moyen de stockage et les premier et deuxième volumes s'étendent sensiblement sur toute la longueur axiale de la paroi externe cylindrique. L'axe longitudinal de ladite paroi externe cylindrique est horizontal.

L'invention concerne également un système de stockage et de récupération d'énergie par gaz comprimé comportant au moins un moyen de compression de gaz, au moins un moyen de stockage du gaz comprimé, au moins un moyen de détente du gaz comprimé pour générer une énergie, et au moins un moyen de stockage de la chaleur selon l'une des caractéristiques précédentes.

L'invention concerne encore un procédé de stockage et de récupération d'énergie par air comprimé comprenant au moins les étapes suivantes :- une étape de compression d'un gaz,
- une étape de stockage et de récupération de la chaleur dans un système de stockage et de récupération de chaleur tel que défini précédemment,
- une étape de stockage du gaz comprimé,
- une étape de détente du gaz comprimé.

### Résumé de l'invention

L'invention concerne un système de stockage et de récupération de la chaleur comprenant au moins une paroi externe cylindrique, le système de stockage et de récupération de chaleur comprenant au moins un premier volume, au moins un deuxième volume, et au moins deux moyens d'injection/soutirage de fluide, lesdits premier et deuxième volumes étant séparés par au moins un moyen de stockage de la chaleur comprenant au moins un lit de particules de stockage de la chaleur. De plus, ledit moyen de stockage de la chaleur et lesdits premier et deuxième volumes s'étendent sensiblement sur toute la longueur axiale de la paroi externe cylindrique. L'axe longitudinal de ladite paroi externe cylindrique est horizontal. Le système comprend au moins un moyen de distribution s'étendant le long du moyen de stockage, sur au moins une surface du moyen de stockage de la chaleur faisant face au premier ou deuxième volume.

Avantageusement, le système comprend une isolation thermique positionnée sur la surface interne de ladite paroi externe cylindrique. Cette isolation thermique peut comprendre de la laine de roche ou de la laine de verre par exemple.

Préférentiellement, le système comprend deux moyens de distribution sur une surface du moyen de stockage de la chaleur faisant face audit premier volume et sur une surface du moyen de stockage de la chaleur faisant face au deuxième volume.

Selon une mise en oeuvre de l'invention, au moins un moyen de distribution comprend des parois poreuses ou dotées d'orifices ou des murs poreux.

De préférence, la section transversale, de préférence radiale, dudit moyen de stockage de la chaleur a une largeur sensiblement constante.

Selon un mode de réalisation de l'invention, chaque moyen de stockage de la chaleur est délimité par deux plans sensiblement verticaux.

De manière avantageuse, chaque moyen de stockage de la chaleur a une section sensiblement rectangulaire, de préférence, une section carrée.

Selon une variante de l'invention, le système comprend deux moyens de stockage de la chaleur, lesdits deux moyens de stockage de la chaleur étant symétriques par rapport à l'axe vertical passant par le centre de la paroi externe cylindrique.

Avantageusement, le moyen de stockage de la chaleur est posé sur une dalle horizontale. Selon une mise en oeuvre du système selon l'invention, le moyen de stockage comprend une portion de tube excentré par rapport à l'axe de la paroi externe cylindrique.

L'invention concerne aussi un système de stockage et de récupération d'énergie par gaz comprimé comportant au moins un moyen de compression de gaz, au moins un moyen de stockage du gaz comprimé, au moins un moyen de détente dudit gaz comprimé pour générer une énergie, et au moins un système de stockage et de récupération de la chaleur selon l'une des caractéristiques précédentes.

Avantageusement, le gaz est de l'air, de préférence de l'air du milieu ambiant.

En outre, l'invention concerne un procédé de stockage et de récupération d'énergie par air comprimé comprenant au moins les étapes suivantes :- une étape de compression d'un gaz,
- une étape de stockage et de récupération de la chaleur dans un système de stockage et de récupération de chaleur selon l'une des caractéristiques précédentes,
- une étape de stockage du gaz comprimé,
- une étape de détente du gaz comprimé.

### Liste des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1 représente un premier système de stockage et de récupération de la chaleur selon l'art antérieur.
La figure 2 représente un deuxième système de stockage et de récupération de la chaleur selon l'art antérieur.
La figure 3 représente une coupe axiale d'un premier mode de réalisation d'un système de stockage et de récupération de la chaleur selon un mode de réalisation de l'invention.
La figure 4 représente une coupe axiale d'un deuxième mode de réalisation d'un système de stockage et de récupération de la chaleur selon un mode de réalisation de l'invention.
La figure 5 représente une coupe axiale d'un troisième mode de réalisation d'un système de stockage et de récupération de la chaleur selon un mode de réalisation de l'invention.

### Description des modes de réalisation

Afin de répondre à l'objectif de levage / manutention d'une part et à la réduction de l'encombrement visuel d'autre part, plusieurs pistes ont pu être envisagées :
- celle qui vient en premier consiste à réduire la hauteur de la colonne et à augmenter son diamètre pour conserver le même volume de réservoir de stockage. Cependant, augmenter le diamètre du réservoir résistant à des pressions internes de plus de 100bar, de préférence de l'ordre de 125 bar, implique d'augmenter nettement l'épaisseur de la paroi du réservoir pour assurer la résistance à la pression. Cette augmentation de l'épaisseur a un impact néfaste sur le coût de l'installation, tel que le système devient économiquement inopérant. Par ailleurs, réduire la hauteur de la colonne entraîne la réduction de la hauteur du lit de particules. Cela conduit à une plus grande variation de température sur une hauteur réduite, ce qui n'est pas souhaitable. Ainsi, pour assurer un bon stockage de la chaleur, il faut assurer une bonne répartition du fluide sur tout le diamètre de la colonne et il est nécessaire de prévoir des moyens de distribution pour cela. Par exemple, il peut s'agit d'un distributeur, comme une paroi dotée d'orifices régulièrement répartis. D'autre part, la faible hauteur du lit de particules de stockage entraîne un gradient thermique sur une longueur assez faible. Les performances de stockage et de récupération de chaleur sont donc réduites. Cette solution n'est donc pas satisfaisante.

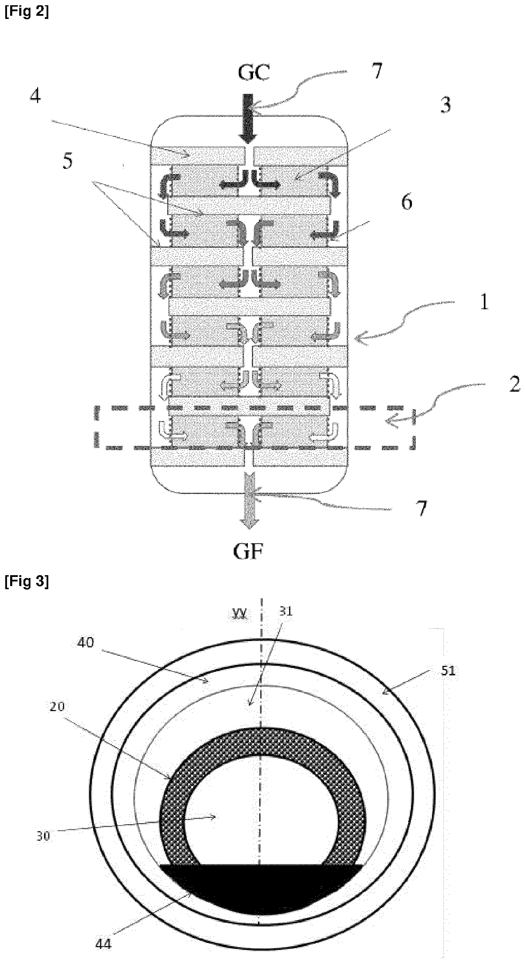

- la deuxième solution consiste à positionner la colonne à l'axe horizontal, c'est-à-dire à positionner l'axe longitudinal de la colonne colinéaire ou sensiblement colinéaire à l'axe horizontal. Ainsi, on peut bénéficier d'une hauteur relativement réduite (limité par le diamètre de la colonne) et augmenter la largeur du système notamment pour maintenir les performances thermiques du lit de stockage de particules, sans impact négatif sur l'épaisseur de la paroi et donc sur son coût. Cependant, cette solution n'est pas évidente. En effet :
   * si on positionne le système de la [Fig 1] à l'axe horizontal, le poids du lit de particules de stockage va être entièrement repris par la paroi externe cylindrique du système, qui reprend déjà les efforts liés à la pression interne. D'autre part, pour éviter un tassement de toute la hauteur du lit, il faudrait prévoir des grilles à l'axe horizontale qu'il sera difficile de mettre en place dans le diamètre de la paroi externe cylindrique. Ainsi, placer le système de la [Fig 1] nécessite des modifications importantes pour pouvoir être positionné à l'axe horizontal.
   * si on positionne le système de la [Fig 2] à l'axe horizontal, les lits vont reposer sur les moyens de distribution 6 qui ne sont pas prévus initialement pour reprendre la charge liée aux poids des lits. Ainsi, il faudra modifier ces moyens de distribution pour d'une part assurer la distribution mais également pour assurer la reprise du poids du lit. De plus, à l'axe horizontal, le poids des lits et des moyens de distribution seront retransmis aux plaques 4 et 5 au niveau des points de fixation des moyens de distribution 6 avec les plaques 4 et 5 alors qu'à l'axe vertical, la reprise des efforts était répartie sur toute la largeur du lit. Le passage du réservoir à l'axe horizontal va donc fragiliser la reprise des poids des lits par les plaques 4 et 5, si bien que des modifications importantes sont nécessaires.

Par ailleurs, le système de la [Fig 2] engendre des pertes de charges importantes car le fluide traverse radialement les lits plusieurs fois entre son entrée dans le réservoir et sa sortie.

Ainsi, positionner un réservoir de stockage et de récupération de chaleur à l'axe horizontal nécessite une réflexion plus aboutie et des modifications supplémentaires pour rendre le système économiquement viable et techniquement compétitif.

L'invention concerne un système de stockage et de récupération de la chaleur comprenant au moins une paroi externe cylindrique, au moins un premier volume, au moins un deuxième volume, et au moins deux moyens d'injection/soutirage de fluide, par exemple un injecteur. Chacun des moyens d'injection/soutirage est associé à un volume différent et ces systèmes sont de préférence réversibles pour être utilisés alternativement en injection de fluide puis en soutirage de fluide. De préférence, chaque volume est connecté à un moyen d'injection/soutirage (de préférence à un seul moyen d'injection/soutirage) différent. Par exemple, le système peut comprendre deux volumes et deux moyens d'injection/soutirage. Les premier et deuxième volumes sont séparés par au moins un moyen de stockage de la chaleur comprenant au moins un lit de particules de stockage de la chaleur. De plus, le moyen de stockage et les premier et deuxième volumes s'étendent sensiblement sur toute la longueur axiale de la paroi externe cylindrique. Ainsi, un fluide, de préférence un gaz, préférentiellement de l'air, est injecté par un des moyens d'injection/soutirage dans le système. De plus, le système peut être configuré pour qu'un fluide arrivant par un moyen d'injection/soutirage puisse traverser le moyen de stockage de la chaleur pour passer d'un volume à l'autre (du premier volume au deuxième volume et/ou inversement). Le fluide, qui arrive par exemple chaud, pénètre alors dans un premier volume du système, puis il traverse transversalement (par exemple radialement) le moyen de stockage de chaleur comprenant le lit de particules de stockage avant d'atteindre le deuxième volume et de ressortir par un autre moyen d'injection/soutirage, associé au deuxième volume. Ainsi, le fluide traverse le moyen de stockage en une seule fois, ce qui limite les pertes de charge et donc améliore les performances du système. Lorsqu'il traverse le lit de particules de stockage, le fluide transmet sa chaleur aux particules de stockage. Il ressort alors plus froid. Ce fonctionnement constitue la charge du système.

Les termes « froid » et « chaud » doivent être compris comme relatifs au cours du fonctionnement du système.

A l'inverse, lors du fonctionnement de décharge du système, le fluide arrive froid par un moyen d'injection et de soutirage et pénètre dans un premier volume puis il traverse de manière transversale le moyen de stockage. Il récupère alors la chaleur du lit de particules de stockage, chaleur qui avait été stockée dans le lit lors du fonctionnement de charge. Il ressort alors dans un deuxième volume plus chaud et ressort du système par un autre moyen d'injection/soutirage associé au deuxième volume.

L'axe longitudinal de la paroi externe cylindrique est horizontal, ce qui permet de réduire l'encombrement visuel et de faciliter les opérations de manutention/levage. En effet, la hauteur du système est limitée par le diamètre de la paroi externe cylindrique, qui est de l'ordre de quelques mètres pour éviter un impact significatif sur le poids et le coût du système de stockage et de récupération de chaleur.

Le système selon l'invention permet donc de répondre au problème technique tout en maintenant les performances thermiques de stockage et de récupération de chaleur du système, notamment par la diminution des pertes de charge et par la conservation de la longueur du lit de particules de stockage.

De manière avantageuse, le système peut comprendre une isolation thermique positionnée sur la surface interne de ladite paroi externe cylindrique. Ainsi, la paroi externe cylindrique est protégée de la température ce qui évite des dilatations thermiques trop importantes de cette paroi. Par ailleurs, le positionnement de l'isolation thermique à l'intérieur permet de mieux contenir la chaleur dans le réservoir constitué par la paroi externe cylindrique. Ainsi, les performances thermiques du système sont améliorées.

Lorsque l'isolation thermique a une épaisseur constante, l'homogénéité de répartition des températures est améliorée. Cela est notamment le cas lorsque l'isolation thermique a une section annulaire ou au moins une portion de section annulaire.

Selon un premier mode de réalisation du système selon l'invention, le système peut comprendre au moins un moyen de distribution s'étendant le long du moyen de stockage, sur au moins une surface du moyen de stockage faisant face audit premier ou deuxième volume. De préférence, le système peut comprendre deux moyens de distribution sur une surface du moyen de stockage faisant face audit premier volume et sur une surface du moyen de stockage faisant face au deuxième volume. Ainsi, la distribution du fluide dans le moyen de stockage est améliorée et la chaleur est alors mieux stockée dans le lit de particules ou mieux récupérée à partir du lit de particules de stockage.

Avantageusement, au moins un moyen de distribution peut comprendre des parois poreuses ou dotées d'orifices ou des murs poreux. De ce fait, la distribution du fluide dans le moyen de stockage est facilitée et améliorée, sans nécessiter de moyens de distribution complexe. De plus, l'utilisation de murs poreux permet d'améliorer la capacité de stockage de chaleur, le mur poreux participant au stockage de la chaleur.

Préférentiellement, la section transversale du moyen de stockage peut avoir une épaisseur sensiblement constante. Ainsi, la distribution du fluide dans le moyen de stockage est améliorée. En effet, en maintenant une épaisseur constante, les pertes de charges sont constantes lors de la traversée du fluide. Il ne se crée alors pas de chemin préférentiel de passage de fluide dans le moyen de stockage, qui pourrait exister aux zones où les pertes de charge seraient réduites.

Selon un mode de réalisation du système selon l'invention, chaque moyen de stockage peut être délimité par deux plans sensiblement verticaux. De ce fait, les plans verticaux servent à maintenir le lit de particules de stockage en position et éventuellement à la mise en place facilitée de grilles horizontales pour la reprise du poids du lit. Ces plans verticaux permettent également de délimiter les espaces pour au moins un premier et au moins un deuxième volume et un volume pour la mise en place du moyen de stockage. Ces plans verticaux s'étendent sur toute la longueur axiale de la paroi externe cylindrique.

Selon une variante de l'invention, chaque moyen de stockage peut avoir une section sensiblement rectangulaire, de préférence, une section sensiblement carrée. Une telle configuration permet une mise en oeuvre simple du moyen de stockage tout en assurant de bonnes performances d'échanges de chaleur notamment par une largeur constante. La section carrée permet une largeur de lit plus large que la section rectangulaire, ce qui permet un gradient thermique moins brutal dans le lit de particules de stockage.

Avantageusement, le système peut comprendre deux moyens de stockage, lesdits deux moyens de stockage étant symétriques par rapport à l'axe vertical passant par le centre de la paroi externe cylindrique. Ainsi, le volume délimité par les deux moyens de stockage est de préférence le volume chaud, c'est-à-dire le volume par lequel le fluide chaud arrive avant de traverser le moyen de stockage dans lequel il va échanger la chaleur avec les particules de stockage ou par lequel le fluide arrivant froid dans le système de stockage ressort après avoir récupéré la chaleur des particules de stockage en passant par le moyen de stockage. Les deux autres volumes générés dans le système et délimités par l'un des moyens de stockage et par la paroi externe cylindrique sont utilisés au contraire comme volumes froids. En effet, par une telle configuration le volume délimité par les deux moyens de stockage se trouve au centre, ce qui permet de limiter les pertes de charges par la paroi externe cylindrique. Par ailleurs, par la symétrie du système, le flux se répartit équitablement dans les deux branches, constituées par les deux volumes externes situés entre l'un des moyens de stockage et la paroi externe cylindrique. Cette répartition homogène permet un meilleur stockage/récupération de chaleur.

Selon une mise en oeuvre de l'invention, le moyen de stockage peut être posé sur une dalle horizontale. La réalisation de cette dalle horizontale est simple et permet une mise en place aisée du moyen de stockage au-dessus de la dalle. Par ailleurs, cette dalle permet une reprise du poids du moyen de stockage et de répartir ce poids sur une plus grande surface de la paroi externe cylindrique, ce qui permet d'éviter les pics de concentration de contraintes locaux sur la paroi externe cylindrique.

Avantageusement, la dalle horizontale est une dalle en béton.

Selon une variante de l'invention, le moyen de stockage peut comprendre une portion de tube excentré par rapport à l'axe de la paroi externe cylindrique. Un tube interne ou une portion de tube interne peut avantageusement être mis(e) en place dans le volume délimité par la paroi externe cylindrique. Le moyen de stockage est contenu dans ce tube ou dans cette portion de tube (par la suite on utilisera uniquement la terminologie « portion de tube »). Cette configuration permet d'avoir un volume délimité par le volume interne de la portion de tube, qui peut avantageusement être utilisé pour le volume chaud. En effet, cette configuration permet de limiter les pertes de chaleur par la paroi externe cylindrique.

Par ailleurs, lorsque la portion de tube est posée sur une dalle horizontale, la mise en place de la portion de tube dans le système est simplifiée. Par ailleurs, la dalle horizontale peut comprendre une partie isolante permettant encore de limiter les pertes de chaleur vers l'extérieur.

L'excentration de la portion de tube permet une réalisation simple du système. En effet, assurer la concentricité de la portion de tube avec la paroi externe cylindrique nécessiterait soit des pattes de fixation au moins en partie autour de la portion de tube, soit une dalle horizontale d'épaisseur importante. Les pattes de fixation seraient alors de mise en place difficile dans un environnement à la paroi externe à l'axe horizontal. De plus, ces pattes devraient alors reprendre le poids de la portion de tube, ce qui d'une part, complexifierait leur conception/réalisation propre et d'autre part, complexifierait encore la mise en place des pattes et de la portion de tube dans le système. L'utilisation d'une dalle horizontale d'épaisseur permettant une concentricité de la portion de tube avec la paroi externe cylindrique n'est pas non plus envisageable car l'épaisseur serait telle qu'il serait nécessaire de prévoir des moyens pour assurer un durcissement homogène de la paroi, de préférence en béton, pour assurer toute fissure. De plus, l'épaisseur de la dalle limiterait le volume nécessite au passage du gaz, ce qui n'est pas du tout souhaitable.

L'invention concerne également un système de stockage et de récupération d'énergie par gaz comprimé comportant au moins un moyen de compression de gaz, (tel qu'un compresseur ou une pompe) au moins un moyen de stockage du gaz comprimé (tel qu'un réservoir), au moins un moyen de détente du gaz comprimé (tel qu'une turbine) pour générer une énergie, et au moins un système de stockage et de récupération de la chaleur selon l'une des caractéristiques précédentes. En effet, le système de stockage et de récupération de la chaleur permet d'améliorer les performances de stockage de la chaleur, en facilitant les opérations de levage/manutention, notamment pour de grands volumes de stockage. Il est donc adapté pour son utilisation dans un système de stockage et de récupération d'énergie par gaz comprimé, notamment AACAES. Il permet ainsi un bon compromis coût - stockage/récupération d'énergie.

De manière avantageuse, le gaz peut être de l'air, de préférence, de l'air du milieu ambiant. En effet, l'air est un fluide compressible et son prélèvement dans le milieu ambiant permet d'éviter un surcoût au système. Par ailleurs, de nombreux moyens de compression / détente tels que compresseurs/turbines sont adaptés au fonctionnement avec de l'air comprimé. Cela permet donc un choix large de ce type de machines.

De plus, l'invention concerne également un procédé de stockage et de récupération d'énergie par air comprimé comprenant au moins les étapes suivantes :
- une étape de compression d'un gaz,- une étape de stockage de la chaleur (refroidissement du gaz) dans un système de stockage et de récupération de chaleur selon l'une des caractéristiques précédentes,
- une étape de stockage du gaz comprimé,
- une étape de récupération de la chaleur (réchauffement du gaz) dans le système de stockage et de récupération de chaleur,
- une étape de détente du gaz comprimé.

Grâce au système de stockage et de récupération décrit, le compromis coût - stockage/récupération d'énergie du procédé est amélioré.

La [Fig 3] illustre, de manière schématique et non limitative, une coupe selon un plan orthogonal à l'axe longitudinal de la paroi externe cylindre 51 selon un premier mode de réalisation de l'invention.

Sur cette figure, une paroi isolante 40 est positionnée sur la surface interne de la paroi externe cylindrique 51, dont l'axe est sensiblement horizontal. Cette paroi isolante 40 permet d'éviter les fuites thermiques vers la paroi externe cylindrique 51, ce qui permet d'améliorer les performances de stockage et de récupération de chaleur du système. Elle a une épaisseur sensiblement constante par une section sensiblement annulaire. L'axe yy représente l'axe vertical. Sur le fond (dans le sens vertical) de la paroi externe cylindrique 51 et de la paroi isolante 40, est positionnée une dalle horizontale 44, de préférence en béton. Cette dalle horizontale 44 permet la mise en place et la fixation d'une portion de tube 20, servant de moyen de stockage et comprenant un lit de particules de stockage de la chaleur, par exemple, des billes de béton ou encore des particules de matériau à changement de phase. La portion de tube 20 est excentrée par rapport à l'axe de la paroi externe cylindrique 51, de manière à éviter d'utiliser une dalle horizontale de forte épaisseur qui limiterait inutilement le volume disponible à l'intérieur de la paroi externe cylindrique 51. La dalle horizontale 44 en béton peut également avoir l'avantage de servir de capacité de stockage de chaleur additionnelle.

Le système de la [Fig 3] permet de délimiter deux volumes distincts. Un premier volume 30 est délimité d'une part par la surface interne de la portion de tube 20 et par la surface horizontale de la dalle horizontale 44. Un deuxième volume 31 est délimité par la surface externe de la portion de tube 20, une partie de la surface horizontale de la dalle horizontale 44 et la surface interne de la paroi isolante 40. Un fluide, tel qu'un gaz, de préférence de l'air, peut circuler dans ces deux volumes 30 et 31. Le premier volume 30, le plus éloigné de la paroi externe cylindrique 51 est de préférence le volume chaud alors que le deuxième volume 31 est de préférence le volume froid. Ainsi, les pertes thermiques sont réduites.

Le fonctionnement du système est le suivant :
*Lors de la phase de charge :*
- le fluide chaud arrive dans le premier volume 30 par un premier moyen d'injection/soutirage (non visible).
- le fluide traverse transversalement, sensiblement radialement selon l'axe de la portion de tube 20, le moyen de stockage constitué par la portion de tube 20. Lors de cette traversée, le fluide échange de la chaleur avec les particules de stockage, qui sont alors initialement froides. Les particules de stockage se réchauffent alors que le fluide se refroidit.
- le fluide ressort froid dans le deuxième volume 31 et ressort du système par un deuxième moyen d'injection/soutirage (non visible).

*Lors de la phase de décharge :*
- le fluide froid arrive dans le deuxième volume 31 par le deuxième moyen d'injection/soutirage.
- le fluide traverse transversalement, sensiblement radialement selon l'axe de la portion de tube 20 en sens sensiblement inverse à la phase de charge, le moyen de stockage constitué par la portion de tube 20. Lors de cette traversée, le fluide échange de la chaleur avec les particules de stockage, qui sont alors initialement chaudes. Les particules de stockage se refroidissent alors que le fluide se réchauffe.
- le fluide ressort chaud dans le premier volume 30 et ressort du système par le premier moyen d'injection/soutirage.

Pour permettre un tel fonctionnement, il est préférable que les moyens d'injection/soutirage tels que des vannes, ou des clapets soient réversibles, c'est-à-dire qu'ils permettent la circulation du fluide dans les deux sens de fonctionnement.

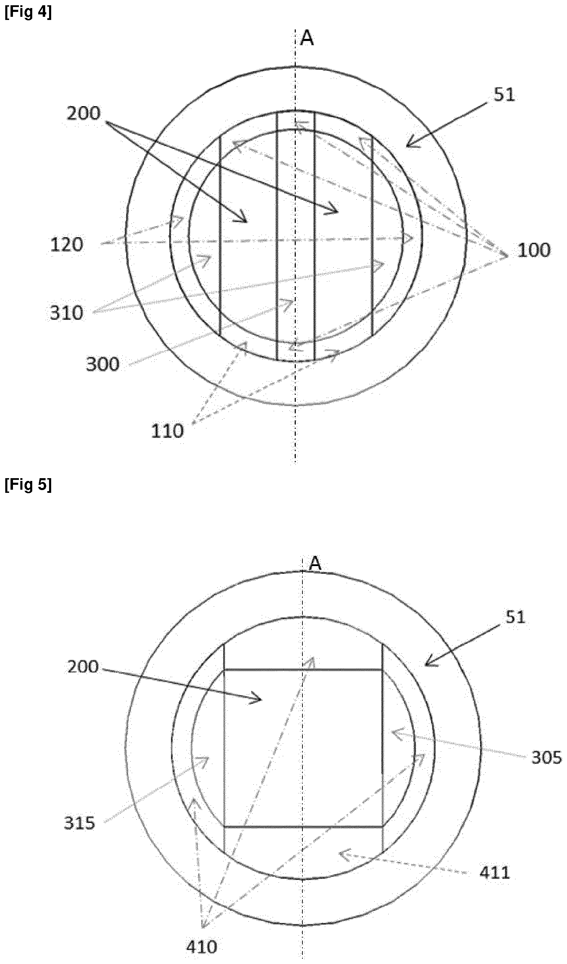

La [Fig 4] illustre, de manière schématique et non limitative, une coupe selon un plan orthogonal à l'axe longitudinal de la paroi externe cylindre 51 selon un deuxième mode de réalisation de l'invention. L'axe A représente l'axe vertical.

Sur cette figure, une paroi isolante est positionnée sur la surface interne de la paroi externe cylindrique 51, dont l'axe est sensiblement horizontal. La paroi isolante est constituée de plusieurs parties 100, 110 et 120. Les parties 100 n'ont qu'une fonction d'isolation thermique ; les parties 110 ont à la fois une fonction d'isolation thermique et de reprise du poids des moyens de stockage 200, les parties 120 n'ont qu'une fonction d'isolation thermique et elles peuvent être omises, contrairement aux parties 100 et 110. Les parties 100, 110 et 120 forment, regroupée, une paroi d'isolation thermique de section annulaire. Le système comprend deux moyens de stockage 200. Ces deux moyens de stockage 200 sont sensiblement symétriques par rapport à l'axe vertical A. Chaque moyen de stockage 200 comprend au moins un lit de particules de stockage de chaleur. De plus, chacun de ces moyens de stockage 200 est délimité par deux plans verticaux parallèles. Chacun des moyens de stockage 200 est en contact en partie supérieure, avec une portion de paroi isolante 100 et en partie inférieure, avec une portion de paroi isolante 110, de manière à éviter les pertes thermiques.

Le système ainsi réalisé définit trois volumes :
- un volume central 300 situé entre les deux moyens de stockage 200 et délimité en partie supérieure et inférieure par des portions de paroi isolante 100 qui ont pour but d'éviter les pertes thermiques.
- deux volumes externes 310 délimités d'une part par l'un des moyens de stockage 200 et d'autre part soit par la portion de paroi isolante 120, soit par la paroi externe cylindrique 51 lorsque la partie de paroi isolante 120 est omise.

De préférence, le volume central 300 est le volume chaud, c'est pourquoi les portions de parois isolantes 100 délimitant ce volume ne peuvent être omises, et les volumes externes 310 sont des volumes froids. Ainsi, les pertes thermiques sont réduites.

Ainsi, le fonctionnement du système est le suivant :
*Lors de la phase de charge :*
- le fluide chaud arrive dans le volume central 300 par un premier moyen d'injection/soutirage (non visible).
- le fluide traverse transversalement, sensiblement perpendiculairement aux plans parallèles des deux moyens de stockage 200, les deux moyens de stockage 200. Ainsi, le flux arrivant dans le volume 300 est divisé en deux flux, chacun de ces deux flux étant dirigé vers un des deux moyens de stockage 200. La symétrie du système permet de répartir équitablement le flux initial en deux flux. Lors de la traversée du fluide dans les moyens de stockage 200, le fluide échange de la chaleur avec les particules de stockage, qui sont alors initialement froides. Les particules de stockage se réchauffent alors que le fluide se refroidit.
- le fluide ressort froid dans les deux volumes externes 310 et ressort du système par un deuxième et un troisième moyens d'injection/soutirage (non visibles), chacun des deuxième et troisième moyens d'injection/soutirage étant connecté à l'un des deux volumes externes 310.

*Lors de la phase de décharge :*
- le fluide froid arrive dans les deux volumes externes 310 par les deuxième et troisième moyens d'injection/soutirage.
- le fluide traverse transversalement, sensiblement perpendiculairement aux plans parallèles des deux moyens de stockage 200, les deux moyens de stockage 200. Lors de cette traversée, le fluide échange de la chaleur avec les particules de stockage, qui sont alors initialement chaudes. Lors de cette traversée, la circulation du fluide est en sens sensiblement inverse de celle du mode de charge. Les particules de stockage se refroidissent alors que le fluide se réchauffe.
- le fluide ressort chaud de chacun des deux moyens de stockage 200 dans le volume central 300. Les deux flux se rejoignent donc pour former un unique flux qui ressort du système par le premier moyen d'injection/soutirage.

Pour permettre un tel fonctionnement, il est préférable que les moyens d'injection/soutirage tels que des vannes, ou des clapets soient réversibles, c'est-à-dire qu'ils permettent la circulation du fluide dans les deux sens de fonctionnement.

La [Fig 5] illustre, de manière schématique et non limitative, une coupe selon un plan orthogonal à l'axe longitudinal de la paroi externe cylindre 51 selon un troisième mode de réalisation de l'invention. L'axe A représente l'axe vertical.

Sur cette figure, une paroi isolante est positionnée sur la surface interne de la paroi externe cylindrique 51, dont l'axe est sensiblement horizontal. La paroi isolante est constituée de plusieurs parties 410 et 411. Les parties 410 n'ont qu'une fonction d'isolation thermique ; les parties 411 ont à la fois une fonction d'isolation thermique et de reprise du poids des moyens de stockage 200.

Le système comprend un seul moyen de stockage 200 de section carrée dans un plan orthogonal à l'axe longitudinal de la paroi externe cylindrique 51. De plus, ce moyen de stockage 200 est délimité par deux plans parallèles et verticaux, ayant une direction colinéaire à l'axe longitudinal de la paroi externe cylindrique 51 et une direction verticale. Le moyen de stockage 200 comprend au moins un lit de particules de stockage de chaleur. Le moyen de stockage 200 est en contact, en partie supérieure, avec une portion de paroi isolante 410 et en partie inférieure, avec une portion de paroi isolante 411, de manière à éviter les pertes thermiques. La forme de la paroi isolante au-dessus et au-dessous du moyen de stockage vertical est prévue pour combler l'espace entre le parallélépipède que forme le moyen de stockage 200 et la partie de volume cylindrique délimitée par la paroi externe cylindrique 51. Ainsi, les sections, dans un plan orthogonal à l'axe longitudinal de la paroi, des parties de paroi isolante située au-dessous et au-dessous du moyen de stockage, sont délimitées par une portion de cercle, deux plans verticaux et un plan horizontal, les deux plans verticaux correspondant aux plans parallèles verticaux du moyen de stockage, la portion de cercle à une portion du diamètre interne de la paroi externe cylindrique 51 et le plan horizontal, à la surface supérieure ou inférieure du moyen de stockage 200.

Le système ainsi réalisé définit deux volumes pour le passage d'un fluide : un premier volume 305 et un deuxième volume 315 situés chacun entre une des surfaces verticales du moyen de stockage 200 et une partie de la paroi externe cylindrique 51 (ou de la partie d'isolation thermique 410 lorsqu'elle est mise en place sur la paroi externe cylindrique 51).

Ainsi, le fonctionnement du système est le suivant.

Lors de la phase de charge :
- le fluide chaud arrive dans l'un des deux volumes 305 ou 315 par un premier moyen d'injection/soutirage (non visible).
- le fluide traverse transversalement, sensiblement perpendiculairement aux plans parallèles du moyen de stockage 200, le moyen de stockage 200. Lors de la traversée du fluide dans le moyen de stockage 200, le fluide échange de la chaleur avec les particules de stockage, qui sont alors initialement froides. Les particules de stockage se réchauffent alors que le fluide se refroidit.
- le fluide ressort froid dans l'autre des deux volumes 305 et 315, puis il ressort du système par un deuxième moyen d'injection/soutirage (non visible), le deuxième moyen d'injection/soutirage étant connecté à ce volume 305 ou 315.

Lors de la phase de décharge, la circulation peut être identique à celle de la phase de charge. Lors de la traversée du fluide dans le moyen de stockage 200, les particules de stockage se refroidissent en transmettant leur chaleur au fluide qui se réchauffe. Alternativement, la circulation peut être inversée par rapport à la phase de charge :
- le fluide froid arrive dans l'un des volumes 305 ou 315 par le deuxième moyen d'injection/soutirage.
- le fluide traverse transversalement, sensiblement perpendiculairement aux plans parallèles du moyen de stockage 200, le moyen de stockage 200. Lors de cette traversée, le fluide échange de la chaleur avec les particules de stockage, qui sont alors initialement chaudes. Les particules de stockage se refroidissent alors que le fluide se réchauffe.
- le fluide ressort chaud du moyen de stockage 200 et atteint l'autre des volumes 305 ou 315, puis il ressort du système par le premier moyen d'injection/soutirage.

Comparativement au fonctionnement de la figure 4, cette configuration de la Figure 5 permet d'avoir une largeur de moyen de stockage plus grande. Par largeur du moyen de stockage, on entend la dimension par laquelle le fluide traverse le moyen de stockage. Sur les figures 4 ou 5, la largeur est donc la distance entre les deux plans verticaux du moyen de stockage 200. En augmentant la largeur, le gradient thermique au sein du moyen de stockage est réparti plus progressivement le long de cette largeur du moyen de stockage 200, ce qui permet de mieux stocker/récupérer la chaleur.

Outre les avantages déjà évoqués, l'invention permet de faciliter l'enterrement au moins partiel du système compte tenu de la hauteur verticale réduite. L'enterrement permet de contenir une grande partie du système en cas d'éclatement. De plus, la réduction de la hauteur permet des opérations d'inspection de service en sécurité plus faciles et des opérations de maintenance éventuelle plus simples, sans réaliser d'inspection ou d'opérations à très grande hauteur.

## Revendications

1. Système de stockage et de récupération de la chaleur comprenant au moins une paroi externe cylindrique (51), le système de stockage et de récupération de chaleur comprenant au moins un premier volume (30, 300, 310, 305, 315), au moins un deuxième volume (31, 300, 310, 305, 315), et au moins deux moyens d'injection/soutirage de fluide, lesdits premier et deuxième volumes (30, 31, 300, 310, 305, 315) étant séparés par au moins un moyen de stockage de la chaleur (20, 200) comprenant au moins un lit de particules de stockage de la chaleur, **caractérisé en ce que** ledit moyen de stockage de la chaleur (20, 200) et lesdits premier et deuxième volumes (30, 31, 300, 310, 305, 315) s'étendent sensiblement sur toute la longueur axiale de la paroi externe cylindrique (51), **en ce que** l'axe longitudinal de ladite paroi externe cylindrique (51) est horizontal et **en ce que** le système comprend au moins un moyen de distribution s'étendant le long du moyen de stockage, sur au moins une surface du moyen de stockage de la chaleur (20, 200) faisant face audit premier ou deuxième volume (30, 31, 300, 310, 305, 315).

2. Système de stockage et de récupération de la chaleur selon la revendication 1 pour lequel le système comprend une isolation thermique (100, 110, 120, 400, 411) positionnée sur la surface interne de ladite paroi externe cylindrique (51).

3. Système de stockage et de récupération de la chaleur selon l'une des revendications précédentes, pour lequel le système comprend deux moyens de distribution sur une surface du moyen de stockage de la chaleur (20, 200) faisant face audit premier volume (30, 300, 310, 305, 315) et sur une surface du moyen de stockage de la chaleur (20,200) faisant face au deuxième volume (31, 300, 310, 305, 315).

4. Système de stockage et de récupération de la chaleur selon l'une des revendications précédentes, pour lequel au moins un moyen de distribution comprend des parois poreuses ou dotées d'orifices ou des murs poreux.

5. Système de stockage et de récupération de la chaleur selon l'une des revendications précédentes pour lequel la section transversale, de préférence radiale, dudit moyen de stockage de la chaleur (20, 200) a une épaisseur sensiblement constante.

6. Système de stockage et de récupération de la chaleur selon la revendication 5 pour lequel chaque moyen de stockage de la chaleur (20, 200) est délimité par deux plans sensiblement verticaux.

7. Système de stockage et de récupération de la chaleur selon la revendication 6, pour lequel, chaque moyen de stockage de la chaleur (20, 200) a une section sensiblement rectangulaire, de préférence, une section carrée.

8. Système de stockage et de récupération de la chaleur selon l'une des revendications 6 ou 7 pour lequel le système comprend deux moyens de stockage de la chaleur (20, 200), lesdits deux moyens de stockage de la chaleur (20, 200) étant symétriques par rapport à l'axe vertical (A) passant par le centre de la paroi externe cylindrique.

9. Système de stockage et de récupération de la chaleur selon l'une des revendications précédentes pour lequel le moyen de stockage de la chaleur (20, 200) est posé sur une dalle horizontale.

10. Système de stockage et de récupération de la chaleur selon l'une des revendications précédentes, pour lequel le moyen de stockage de la chaleur (20, 200) comprend une portion de tube excentré (20) par rapport à l'axe de la paroi externe cylindrique (51).

11. Système de stockage et de récupération d'énergie par gaz comprimé comportant au moins un moyen de compression de gaz, au moins un moyen de stockage du gaz comprimé, au moins un moyen de détente dudit gaz comprimé pour générer une énergie, et au moins un système de stockage et de récupération de la chaleur selon l'une des revendications précédentes.

12. Système de stockage et de récupération d'énergie par gaz comprimé selon la revendication 11 pour lequel le gaz est de l'air, de préférence de l'air du milieu ambiant.

13. Procédé de stockage et de récupération d'énergie par air comprimé comprenant au moins les étapes suivantes : - une étape de compression d'un gaz,
- une étape de stockage de la chaleur dans un système de stockage et de récupération de chaleur selon l'une des revendications 1 à 10,
- une étape de stockage du gaz comprimé,
- une étape de récupération de la chaleur dans ledit système de stockage et de récupération de chaleur selon l'une des revendications 1 à 10,
- une étape de détente du gaz comprimé.

## Patentansprüche

1. System zur Wärmespeicherung und -rückgewinnung, aufweisend mindestens eine zylindrische Außenwand (51), wobei das System zur Wärmespeicherung und -rückgewinnung mindestens ein erstes Volumen (30, 300, 310, 305, 315), mindestens ein zweites Volumen (31, 300, 310, 305, 315) und mindestens zwei Mittel zur Beaufschlagung/Entnahme von Fluid aufweist, wobei das erste und zweite Volumen (30, 31,300, 310, 305, 315) durch mindestens ein Wärmespeichermittel (20, 200) getrennt sind, das mindestens ein Bett aus Wärmespeicherpartikeln aufweist, **dadurch gekennzeichnet, dass** sich das Wärmespeichermittel (20, 200) und das erste und zweite Volumen (30, 31, 300, 310, 305, 315) im Wesentlichen über die gesamte axiale Länge der zylindrischen Außenwand (51) erstrecken, dass die Längsachse der zylindrischen Außenwand (51) horizontal ist und dass das System mindestens ein sich entlang des Speichermittels erstreckendes Verteilungsmittel auf mindestens einer Fläche des Wärmespeichers (20, 200) aufweist, die dem ersten oder zweiten Volumen (30, 31, 300, 310, 305, 315) zugewandt ist.

2. System zur Wärmespeicherung und -rückgewinnung nach Anspruch 1, wobei das System eine auf der Innenfläche der zylindrischen Außenwand (51) positionierte Wärmeisolation (100, 110, 120, 400, 411) aufweist.

3. System zur Wärmespeicherung und -rückgewinnung nach einem der vorhergehenden Ansprüche, wobei das System zwei Verteilungsmittel auf einer dem ersten Volumen (30, 300, 310, 305, 315) zugewandten Fläche des Wärmespeichermittels (20, 200) und auf einer dem zweiten Volumen (31, 300, 310, 305, 315) zugewandten Fläche des Wärmespeichermittels (20, 200) aufweist.

4. System zur Wärmespeicherung und -rückgewinnung nach einem der vorhergehenden Ansprüche, wobei mindestens ein Verteilungsmittel poröse oder mit Öffnungen versehene Wandungen oder poröse Wände aufweist.

5. System zur Wärmespeicherung und -rückgewinnung nach einem der vorhergehenden Ansprüche, wobei der, vorzugsweise radiale, Querschnitt des Wärmespeichermittels (20, 200) eine im wesentlichen konstante Dicke aufweist.

6. System zur Wärmespeicherung und -rückgewinnung nach Anspruch 5, wobei jedes Wärmespeichermittel (20, 200) durch zwei im Wesentlichen vertikale Ebenen begrenzt ist.

7. System zur Wärmespeicherung und -rückgewinnung nach Anspruch 6, wobei jedes Wärmespeichermittel (20, 200) einen im Wesentlichen rechteckigen Querschnitt, vorzugsweise einen quadratischen Querschnitt, aufweist.

8. System zur Wärmespeicherung und -rückgewinnung nach einem der Ansprüche 6 oder 7, wobei das System zwei Wärmespeichermittel (20, 200) aufweist, wobei die beiden Wärmespeichermittel (20, 200) symmetrisch in Bezug auf die durch die Mitte der zylindrischen Außenwand verlaufende vertikale Achse (A) sind.

9. System zur Wärmespeicherung und -rückgewinnung nach einem der vorhergehenden Ansprüche, wobei jedes Wärmespeichermittel (20, 200) auf eine horizontale Platte gestellt ist.

10. System zur Wärmespeicherung und -rückgewinnung nach einem der vorhergehenden Ansprüche, wobei das Wärmespeichermittel (20, 200) einen in Bezug auf die Achse der zylindrischen Außenwand exzentrischen Rohrabschnitt (20) aufweist.

11. System zur Speicherung und Rückgewinnung von Energie durch komprimiertes Gas, umfassend mindestens ein Gaskomprimierungsmittel, mindestens ein Mittel zur Speicherung des komprimierten Gases, mindestens ein Mittel zur Entspannung des komprimierten Gases zur Erzeugung von Energie und mindestens ein System zur Wärmespeicherung und -rückgewinnung nach einem der vorhergehenden Ansprüche.

12. System zur Speicherung und Rückgewinnung von Energie durch komprimiertes Gas nach Anspruch 11, wobei das Gas Luft, vorzugsweise Umgebungsluft, ist.

13. Verfahren zur Speicherung und Rückgewinnung von Energie durch komprimierte Luft, aufweisend mindestens die folgenden Schritte:
- einen Schritt der Verdichtung eines Gases,
- einen Schritt der Wärmespeicherung in einem System zur Wärmespeicherung und -rückgewinnung nach einem der Ansprüche 1 bis 10,
- einen Schritt der Speicherung des komprimierten Gases,
- einen Schritt der Wärmerückgewinnung in dem System zur Wärmespeicherung und -rückgewinnung nach einem der Ansprüche 1 bis 10,
- einen Schritt der Entspannung des komprimierten Gases.

## Claims

1. Heat storage and recovery system comprising at least one cylindrical external wall (51), the heat storage and recovery system comprising at least one first volume (30, 300, 310, 305, 315), at least one second volume (31, 300, 310, 305, 315) and at least two fluid injection/withdrawal means, the said first and second volumes (30, 31, 300, 310, 305, 315) being separated by at least one heat storage means (20, 200) comprising at least one bed of heat storage particles, **characterized in that** the said heat storage means (20, 200) and the said first and second volumes (30, 31, 300, 310, 305, 315) extend substantially over the entire axial length of the cylindrical external wall (51), **in that** the longitudinal axis of the said cylindrical external wall (51) is horizontal and **in that** the system comprises at least one distribution means extending along the storage means, on at least one surface of the heat storage means (20, 200) facing the said first or second volume (30, 31, 300, 310, 305, 315).

2. Heat storage and recovery system according to Claim 1, for which the system comprises a thermal insulation (100, 110, 120, 400, 411) positioned on the internal surface of the said cylindrical external wall (51).

3. Heat storage and recovery system according to either of the preceding claims, for which the system comprises two distribution means on a surface of the heat storage means (20, 200) facing the said first volume (30, 300, 310, 305, 315) and on a surface of the heat storage means (20, 200) facing the second volume (31, 300, 310, 305, 315) .

4. Heat storage and recovery system according to one of the preceding claims, for which at least one distribution means comprises porous walls or walls having orifices or porous barriers.

5. Heat storage and recovery system according to one of the preceding claims, for which the cross section, preferably the radial cross section, of the said heat storage means (20, 200) has a substantially constant thickness.

6. Heat storage and recovery system according to Claim 5, for which each heat storage means (20, 200) is delimited by two substantially vertical planes.

7. Heat storage and recovery system according to Claim 6, for which each heat storage means (20, 200) has a substantially rectangular section, preferably a square section.

8. Heat storage and recovery system according to either of Claims 6 and 7, for which the system comprises two heat storage means (20, 200), the said two heat storage means (20, 200) being symmetrical with respect to the vertical axis (A) passing through the centre of the cylindrical external wall.

9. Heat storage and recovery system according to one of the preceding claims, for which the heat storage means (20, 200) is set down on a horizontal slab.

10. Heat storage and recovery system according to one of the preceding claims, for which the heat storage means (20, 200) comprises a pipe portion (20) off-centre with respect to the axis of the cylindrical external wall (51) .

11. System for the storage and recovery of energy by compressed gas comprising at least one gas compression means, at least one means of storage of the compressed gas, at least one means of expansion of the said compressed gas in order to generate energy, and at least one heat storage and recovery system according to one of the preceding claims.

12. System for the storage and recovery of energy by compressed gas according to Claim 11, for which the gas is air, preferably air of the ambient environment.

13. Process for the storage and recovery of energy by compressed air comprising at least the following stages:
- a stage of compression of a gas,
- a stage of storage of heat in a heat storage and recovery system according to one of Claims 1 to 10,
- a stage of storage of the compressed gas,
- a stage of recovery of the heat in the said heat storage and recovery system according to one of Claims 1 to 10,
- a stage of expansion of the compressed gas.
